# EUROPEAN PATENT APPLICATION

(11) **EP 4 603 823 A1**
(43) Date of publication of application: **20.08.2025**
(21) Application number: 23876635.6
(22) Date of filing: 09.10.2023
(51) Int. Cl.: G01N 21/25

(54) **ONLINE MONITORING APPARATUS FOR CHEMICAL-MECHANICAL POLISHING**

(30) Priority: 11.10.2022 CN 202211239231; 22.09.2023 CN 202311239658
(71) Applicant: Hangzhou Sizone Electronic Technology Inc., Hangzhou Zhejiang 311300 (CN)
(72) Inventor: YANG, Zhe, Hangzhou, Zhejiang 311300 (CN); ZHOU, Yuanpeng, Hangzhou, Zhejiang 311300 (CN); YU, Kang, Hangzhou, Zhejiang 311300 (CN)
(74) Representative: Becker, Eberhard
(86) International application number: PCT/CN2023/123482
(87) International publication number: WO 2024/078433

(57) **Abstract**

An online monitoring apparatus for chemical-mechanical polishing, which is provided in a polishing disc (1), and can rotate along with the polishing disc (1). The apparatus comprises: a light source (9); an optical lens group (10), used to receive a light beam emitted by the light source (9) and generate a collimated light beam; a reflection unit (12), used to receive the collimated light beam, and reflect same to form an incident optical path; a detection probe (13), provided below a light-transmitting window (4) of a polishing pad (1) and comprising a quartz light guide tube (131) and a single-core optical fiber (132), the quartz light guide tube (131) being used to receive an incident optical path and emit same from an end of the detection probe (134) close to a wafer (8), and the single-core optical fiber (132) being used to receive an exit optical path reflected by a surface of the wafer (8); and a detector (11), connected to the single-core optical fiber (132) and used to receive the exit optical path, so as to acquire corresponding spectrum information and determine a polishing end point of the wafer (8). Free space propagation is used in a light source optical path from the light source (9) to the detection probe (13), optical fiber propagation is used in a signal optical path from the detection probe (13) to the detector (11), and the two light beam propagation modes depend on the design of the detection probe (13) to achieve good transition and high-precision detection.

## Description

### Technical Field

The invention belongs to the technical field of CMP, and particularly relates to an online monitoring device for CMP.

### Related Art

At present, in the fabrication process of semiconductor integrated circuit chips, chemical mechanical polishing (CMP) is an important process step. In a chemical mechanical planarization process, a polishing pad and polishing liquid are used to polish wafers, and surfaces of the wafers are planarized chemically and mechanically. In this process, it is extremely important to determine the polishing end-point, namely to determine whether a desired removal amount or a desired thickness is obtained to complete the process.

In the early stage, the end-point of the CMP process is controlled by controlling the polishing time, but the precision is low, and the reliability is poor. To adapt to different processes, a series of end-point detection methods were developed. A mechanical end-point detection method mainly monitors a change of the motor torque caused by the change of friction of materials in the polishing process; however, such a detection method requires two dielectric layers with drastically different friction coefficients and has a narrow application range. An electromagnetic end-point detection method mainly monitors an eddy current generated by a metal layer on the surface of a wafer and can be used for detecting the thickness of metal films, but it cannot be applied to insulating materials. An optical end-point detection method mainly measures the intensity of light reflected by wafers and monitors the change of the reflectivity of a material in the polishing process by means of monochromatic laser, but such a detection method requires two dielectric layers which are drastically different in reflectivity; for a transparent dielectric layer, the intensity of light reflected by wafers is the intensity of interference light reflected by the surface of the dielectric layer, the removal amount can be obtained according to a change of the intensity of the interference light, but film thickness information cannot be obtained. A spectral end-point detection method, developed from the optical end-point detection method, adopts polychromatic light, broadband light, white light or other light sources, receives spectral information reflected by wafers and monitors the thickness change according to the corresponding relation between the spectral information and the film thickness, and this method is used for detecting the thickness of transparent dielectric films.

### SUMMARY OF INVENTION

To overcome the defects in the prior art, the invention provides an online monitoring device for CMP, which can realize high-precision detection by means of beam propagation in free space and beam propagation by an optical fiber.

The technical solution adopted by the invention to solve the above technical problems is as follows: an online monitoring device for CMP is arranged in a polishing disc, rotates with the polishing disc, and comprises:
a light source;
an optical lens set, configured to receive a light beam emitted by the light source and generate a collimated beam;
a reflecting unit, configured to receive the collimated beam and reflect the collimated beam to form an incident beam;
a detection probe, arranged below a light window of a polishing pad and at least comprising a quartz light tube and a single-core optical fiber, the quartz light tube being configured to receive the incident beam and emit the incident beam from an end, close to a wafer, of the detection probe, and the single-core optical fiber being configured to receive an emergent beam reflected by a surface of the wafer;
a detector, connected to the single-core optical fiber and configured to receive the emergent beam to acquire corresponding spectral information to determine a polishing end-point of the wafer.

Further, the detection probe further comprises a shell; the quartz light tube wraps the single-core optical fiber, the shell wraps the quartz light tube, and the shell, the quartz light tube and the single-core optical fiber are arranged concentrically; or, the quartz light tube and the single-core optical fiber are arranged adjacently, and the shell wraps the quartz light tube and the single-core optical fiber.

Further, the quartz light tube is flush with an end surface of an end, close to the wafer, of the single-core optical fiber, and an end surface, close to the wafer, of the quartz light tube has a chamfer.

Further, the chamfer is a straight chamfer with a tilt angle of 0-45°; or, the chamfer is a circular chamfer with a curvature of 0-2 mm⁻¹.

Further, at an end where the quartz light tube and the single-core optical fiber are away from the wafer, the single-core optical fiber protrudes out of the quartz light tube.

Further, the outer diameter of the quartz light tube is 1-4 mm, and the outer diameter of the single-core optical fiber is 0.1-2 mm.

Further, the light source is a broadband light source and has a wavelength of 200-2000 nm, and the collimated beam has a diameter of 1-10 mm.

Further, the detector is a spectrometer; the detector acquires the corresponding spectral information and converts the corresponding spectral information into thickness information of a dielectric film on the surface of the wafer to determine the polishing end-point of the wafer.

Further, the online monitoring device for CMP further comprises a reference light sampling unit arranged between the optical lens set and the detection probe and configured to monitor a light intensity of the light source.

Further, the reference light sampling unit comprises a first beam splitter and a second beam splitter, the collimated beam passes through the first beam splitter to form a signal light and a reference light, and the signal light penetrates through the first beam splitter to enter the detection probe.

The invention has the following merits: (1) a unique detection light path system is adopted, propagation in free space is adopted on a light source path from the light source to the detector probe, optical fiber propagation is adopted on a signal light path from the detection probe to the detector, and a good transition between the two beam propagation methods is fulfilled by means of the design of the detection probe, such that the whole detection light path system can realize high-precision detection by combining the advantages of the two beam propagation methods; (2) most light from the light source can sufficiently reach the detection probe, and a large coupling loss of the light beam from the light source to the optical fiber is avoided; (3) on the signal light path, the optical fiber is used to collect valid signals, such that the signal collection point is sufficiently close to the surface of the wafer, and the signals can stably reach the detector by means of stable transmission of the optical fiber; (4) a light emitted from the end surface of the quartz light tube is focused, and detection light energy is collected to further increase the intensity of the signal light, thus improving the detection precision; the detection area is narrowed, such that the detection range of the detection probe on the wafer can be limited to more accurately determine a detection position (5) by means of the unique design of the detection light path system and the probe, the detection system provided by the invention has the advantages of high precision, accurate positioning and low noise, and can better satisfy existing process requirements; (6) online monitoring of CMP is realized, the monitoring device, as one part of a CMP polishing system, relies on a CMP polishing module, rotates with the polishing disc and performs detection in the polishing process to provide reference for determining the polishing end-point, and once it reaches the polishing end-point, polishing is stopped; (7) the overall size is small; (8) the light source is controlled and the light intensity is monitored in real time by signal control, such that the stability of measurement signals is guaranteed, the detection precision is improved, and the service life of the light source is prolonged.

### BRIEF DESCRIPTION OF DRAWINGS

FIG. 1 is a structural diagram of a CMP system according to the invention.
FIG. 2 is a top view of the CMP system according to the invention.
FIG. 3 is a perspective view of the cooperation between an online monitoring device and a CMP system according to Embodiment 1 of the invention.
FIG. 4 is a structural diagram of a part where a detection probe is located according to Embodiment 1 of the invention.
FIG. 5 is a horizontal sectional view of the detection probe according to Embodiment 1 of the invention.
FIG. 6 is a vertical sectional view of the detection probe according to Embodiment 1 of the invention in a case where a chamfer is a straight chamfer.
FIG. 7 is a vertical sectional view of the detection probe according to Embodiment 1 of the invention in a case where the chamfer is a circular chamfer.
FIG. 8 is a schematic diagram of light focusing of the detection probe according to Embodiment 1 of the invention, wherein in a, the detection probe has a chamfer, and in b, the detection probe does not have a chamfer.
FIG. 9 illustrates spectral reflectivity curves corresponding to different film thicknesses.
FIG. 10 illustrates the comparison of a background spectrum (dotted line) and a signal spectrum (solid line).
FIG. 11 is a perspective view of the cooperation between an online monitoring device and a CMP system according to Embodiment 2 of the invention.

Wherein: 1, polishing disc; 2, polishing pad; 3, polishing liquid spray arm; 4, light window; 5, polishing head; 6, trimmer; 7, light window path; 8, wafer; 9, light source; 10, optical lens set; 11, detector; 12, reflecting unit; 13, detection probe; 131, quartz light tube; 132, single-core optical fiber; 133, shell; 134, proximal end of detection probe; 135, distant end of detection probe; 136, chamfer of quartz light tube; 14, reference light sampling unit; 141, beam splitter.

### DESCRIPTION OF EMBODIMENTS

To allow those skilled in the art to have a better understanding of the technical solutions of the invention, the technical solutions in the embodiments of the invention will be clearly and completely described below in conjunction with accompanying drawings of these embodiments. Obviously, the embodiments described below are merely illustrative ones, and are not all possible ones of the invention. All other embodiments obtained by ordinarily skilled in the art based on the following ones without creative labor should also fall within the protection scope of the invention.

### Embodiment 1

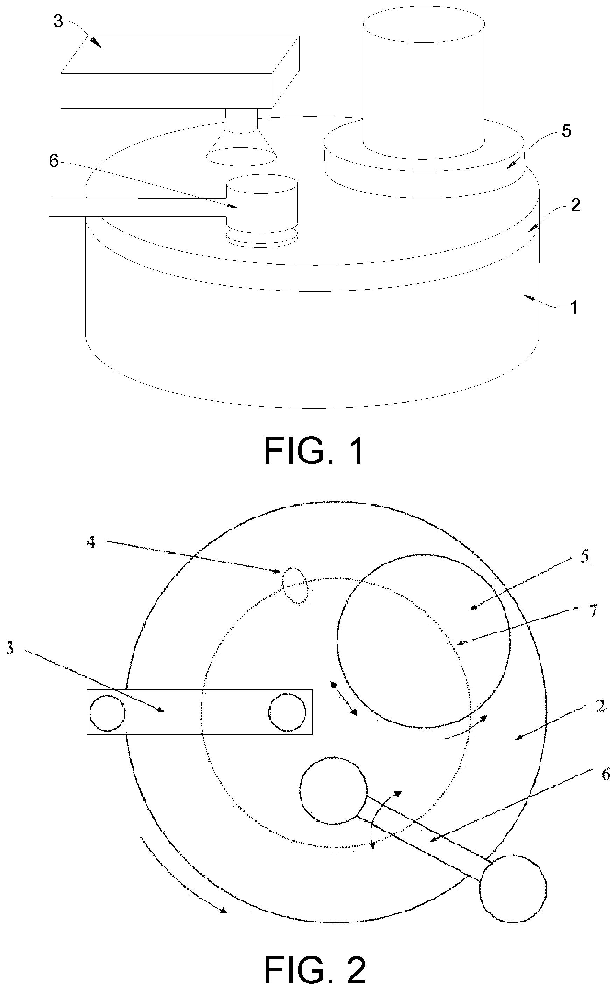

As shown in FIG. 1, in the CMP process, a polishing pad 2 is fixed to a polishing disc 1, a wafer 8 is carried by a polishing head 5 and clings to the polishing pad 2, and the polishing disc 1 is rotatable, and the polishing head 5 is rotatable and moves back and forth with respect to the polishing disc 1 to generate friction between the wafer 8 and the polishing pad 2 to fulfill a mechanical polishing effect. A polishing liquid spray arm 3 sprays polishing liquid by means of nozzles, and with the rotation of the polishing disc 1, the polishing liquid reaches the polishing head 5 and comes in contact with the wafer 8 by means of a groove structure on the polishing pad 2 to fulfill a chemical polishing effect. A trimmer 6 is configured to trim the polishing pad 2 to maintain the flatness and coarseness of the polishing pad 2.

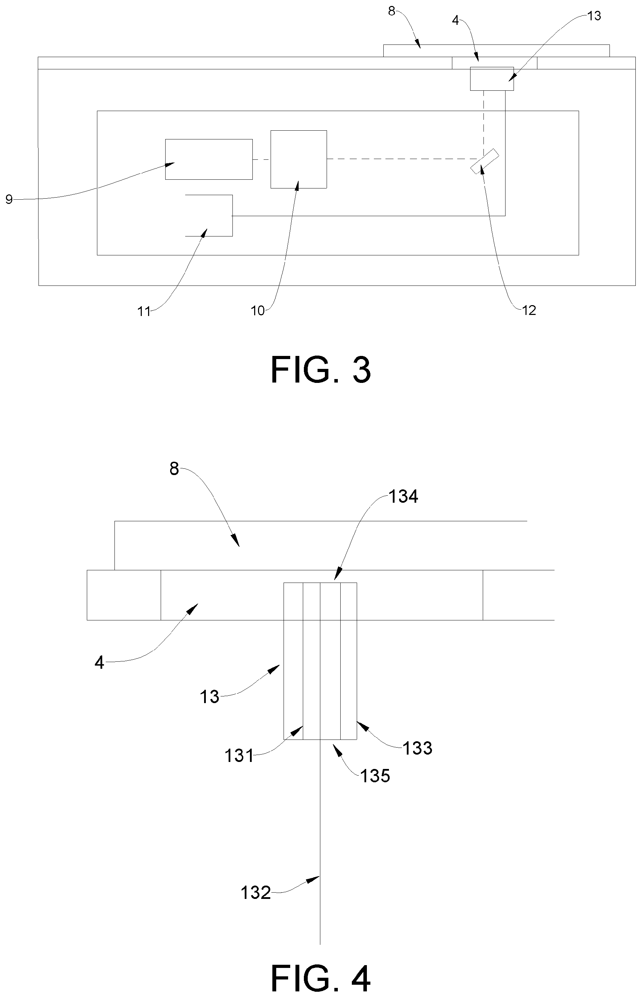

As shown in FIGS. 2-5, an online monitoring device for CMP is arranged in an internal space of the polishing disc 1, rotates with the polishing disc 1, and comprises a light source 9, an optical lens set 10, a reflecting unit 12, a detection probe 13 and a detector 11.

The light source 9 is a broadband white light source and has a wavelength of 200-2000 nm. A light beam emitted by the light source 9 enters the optical lens set 10.

The optical lens set 10 is configured to receive the light beam emitted by the light source and generate a collimated beam, wherein the diameter of the collimated beam is 1-10 mm. Specifically, the optical lens set 10 is formed by a series of light lenses and configured to collect the light beam, reduce the diameter of the light beam, and collimate the light beam; the light beam enters the optical lens set 10, and under the action of the optical lens set 10, a collimated small-spot parallel beam is formed, exits from the optical lens set 10, and reaches the reflecting unit 12 in the form a space light. The optical lens set 10 couples the light beam emitted by the light source 8 by reducing the diameter of the light and collimating the light beam, such that the problem of low light utilization rate of the light source caused by traditional optical fiber coupling is solved, and a larger proportion of light energy participates in detection, thus improving the measurement precision, and reducing power required by the light source 9.

The reflecting unit 12 is configured to receive the collimated beam and reflect the collimated beam to form an incident beam. In this embodiment, the reflecting unit 12 is a reflector.

The detection probe 13 is arranged below a light window 4 of the polishing pad 2 and comprises a quartz light tube 131, a single-core optical fiber 132 and a shell 133. The quartz light tube 131 is configured to receive the incident beam and emit the incident beam from a proximal end 134 of the detection probe 13 (an end, close to the wafer 8, of the detection probe 13 is defined as the proximal end), and the single-core optical fiber 132 is configured to receive an emergent beam reflected by the surface of the wafer 8.

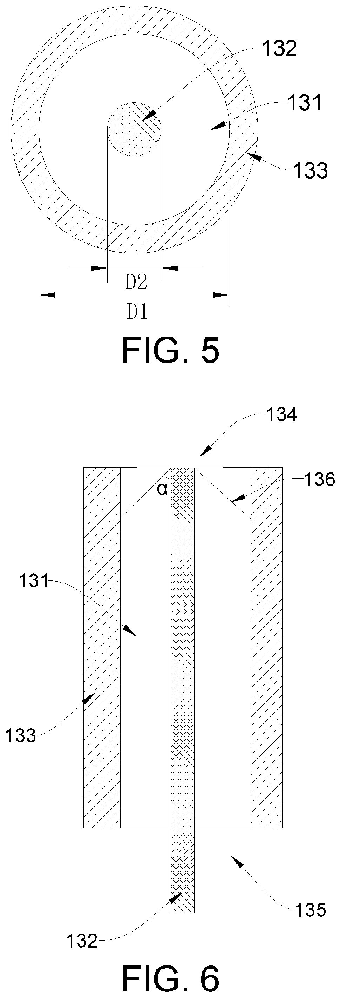

Specifically, as shown in FIG. 5, the quartz light tube 131 wraps the single-core optical fiber 132, the shell 133 wraps the quartz light tube 131, and the shell 133, the quartz light tube 131 and the single-core optical fiber 132 are arranged concentrically. The outer diameter of the quartz light tube 131 is 1-4 mm, that is, D1 in FIG. 5 is 1-4 mm; the outer diameter of the single-core optical fiber 132 is 1-2 mm, that is, D2 in FIG. 5 is 0.1-2mm. The inner diameter of the quartz light tube 131 is the same as the outer diameter of the single-core optical fiber 132, the single-core optical fiber 132 is located in a central hole of the quartz light tube 131, and the quartz light tube 131 and the single-core optical fiber 132 are concentric. The inner diameter of the shell 133 is the same as the outer diameter of the quartz light tube 131.

Of course, in other embodiments, the quartz light tube 131 and the single-core optical fiber 132 may be arranged adjacently, and the shell 133 wraps the quartz light tube 131 and the single-core optical fiber 132, that is, the shell 133, the quartz light tube 131 and the single-core optical fiber 132 are non-concentric.

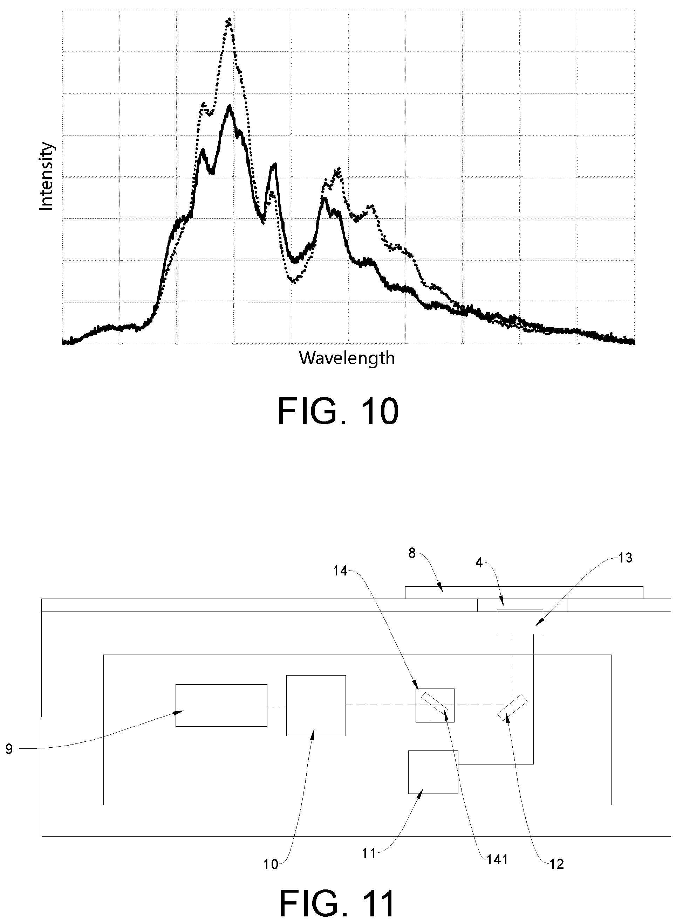

The detector 11 is a spectrometer and configured to receive the emergent beam, that is, the detector 11 receives a signal light reflected by the wafer 8 to obtain corresponding spectral information to determine a polishing end-point of the wafer 8. Specifically, the detector 11 is connected to the single-core optical fiber 132. Specifically, as shown in FIG. 10, a difference between a signal spectrum and a background spectrum indicates spectral information including the film thickness.

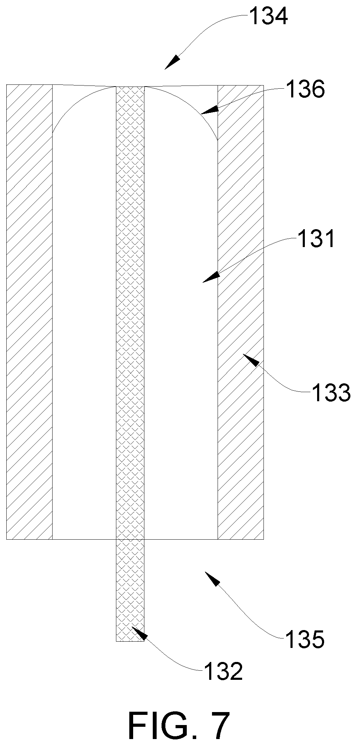

As shown in FIGS. 6 and 7, the quartz light tube 131 is flush with an end surface of an end, close to the wafer 8, of the single-core optical fiber 132, that is, the quartz light tube 131 is flush with an end surface of the proximal end 134 of the detector 11, and an end surface, close to the wafer 8, of the quartz light tube 131 has a chamfer 136. The chamfer may be a straight chamfer with a tilt angle of 0-45°, that is, the angle α in FIG. 6 is 0-45°. The chamfer may also be a circular chamfer with a curvature of 0-2 mm⁻¹, as shown in FIG. 7. At an end where the quartz light tube 131 and the single-core optical fiber 132 are away from the wafer 8, that is, at a distant end 135 of the detector 11, the single-core optical fiber 132 protrudes out of the quartz light tube 131.

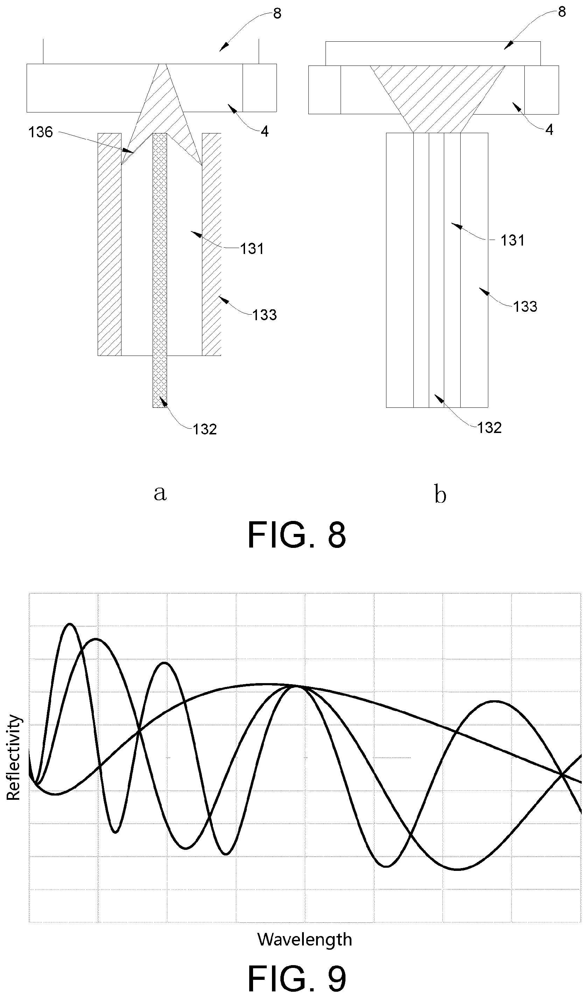

The quartz light tube 131 has a beam propagation effect and as a transition between beam propagation in free space and beam propagation in a medium, guarantees the sealing performance and stability of a whole detection system. Compared with the structure that the quartz light tube 131 is flush with the proximal end 134 of the detector 11 in b of FIG. 8, the end surface, close to the proximal end 134 of the detector 11, has the chamfer 136 as shown in a of FIG. 8, such that a light emitted from the end surface of the quartz light tube 131 is focused; the angle and curvature of the end surface of the quartz light tube are designed according to the thickness of the light window to ensure that a light spot is focused on a detected surface of the wafer 8, and detection light energy is collected to further increase the intensity of the signal light, thus improving the detection precision; the detection area is narrowed, such that the detection range of the detection probe 13 on the wafer 8 can be limited to more accurately determine a detection position, and signal shielding caused by various existing patterns and microdevices on the wafer 8 is avoided, thus increasing the number of effective detection points. A traditional multi-core fiber optic probe generally has a divergence angle of 20-30°, and the detection area often reaches several millimeters due to the diameter of the optical fiber. In the invention, the size of a detection spot can be limited with tens to hundreds of microns, and a focus lens or other structures do not need to be added in front of the detection probe, such that the structural complexity will not be increased, and surface reflection noise caused by a lens is avoided. With the further development of the wafer manufacturing process, the complexity of patterns on wafers is further increased, and the size of devices is further decreased, so the detection precision of traditional large spots can no longer satisfy process requirements. By means of the unique design of a detection light path system and the probe, the detection system provided by the invention has the advantages of high precision, accurate positioning and low noise, and can better satisfy existing process requirements.

After receiving the corresponding spectral information, the detector 11 converts the corresponding spectral information into thickness information of a dielectric film on the surface of the wafer 8 to determine the polishing end-point of the wafer 8. In other embodiment, whether a target value is obtained may be determined according to characteristic spectral lines, feature points or other signals, which depends on an adopted end-point detection algorithm and it is not limited to the film thickness information. As shown in FIG. 9, different film thicknesses correspond to different spectral reflectivity curves, such that the polishing end-point can be determined.

The operating process of the invention is as follows: a light beam emitted by the light source 9 is collected and collimated by the optical lens set 10, reflected by the reflecting unit 12 to the detection probe 13, emitted by the quartz light tube 121 from the proximal end 134 of the detection probe 13, and irradiated onto the surface of the wafer 8 on the polishing pad 2 via the light window 4 on the polishing pad 2; the light reflected by the surface of the wafer 8 passes through the light window 4, is then received by the single-core optical fiber 17 on the detection probe 16, and reaches the detector 11; and the detector 11 is a spectrometer and receives the signal light reflected by the wafer 8 to obtain corresponding spectral information.

According to the invention, a unique detection light path system is adopted, propagation in free space is adopted on a light source path from the light source 9 to the detector probe 16, optical fiber propagation is adopted on a signal light path from the detection probe 16 to the detector 11, and a good transition between the two beam propagation methods is fulfilled by means of the design of the detection probe 16, such that the whole detection light path system can realize high-precision detection by combining the advantages of the two beam propagation methods; compared with the traditional technical solution adopting a Y-shaped optical fiber for guiding light, in the invention, propagation in free space is adopted on the light source path, the lens set is used to collect and collimate the beam, and the reflecting unit 12 is used to adjust the direction of the beam, such that most light from the light source 9 can sufficiently reach the detection probe 13, a large coupling loss of the light beam from the light source 9 to the optical fiber is avoided, the power of the light source (a xenon lamp) is fully used, detection requirements can be satisfied with a light source with lower power, or higher-intensity light can participate in detection at the position of the detection probe 13; in the invention, on the signal light path, the optical fiber is used to collect valid signals, such that the signal collection point is sufficiently close to a detection target (the surface of the wafer), and the signals can stably reach the detector by means of stable transmission of the optical fiber; by means of the advantages of propagation in free space and propagation by means of the optical fiber, the detection precision of the whole system is improved.

### Embodiment 2

As shown in FIG. 11, based on Embodiment 1, the online monitoring device for CMP in this embodiment further comprises a reference light sampling unit 14, which is arranged between the optical lens set 10 and the detection probe 13 and configured to monitor the light intensity of the light source 9, and comprises a light intensity detector.

The reference light sampling unit 14 comprises a beam splitter 141. A light beam emitted by the light source 9 is collimated by the optical lens set 10, a collimated beam emitted by the optical lens set 10 reaches the reference light sampling unit 14 and is divided by the beam splitter 141 into two beams, that is, after the collimated beam passes through the beam splitter 141, a signal light and a reference light are formed, wherein the beam of transmissive light is the signal light, which penetrates through the beam splitter 141 to enter the reflecting unit 12, and the beams of reflected light is the reference light, which reaches the light intensity detector to obtain a light intensity of the reference light.

In addition, the online monitoring device for CMP in this embodiment further comprises a controller, which is configured to control the on/off and light intensity of the light source 9 and calculate and determine the polishing end-point of the wafer 8 according to the spectral information acquired by the detector 11. The controller is connected to the light source 9, the detector 11 and the light intensity detector. The controller may be connected to the light source 9, the detector 11 and the light intensity detector inside the polishing disc 1, or outside the polishing disc 1 by means of slip rings or the like.

The controller sends a control signal to the light source 9 directly or indirectly, and sends a control signal to the detector 11, and the detector 11 sends a control signal to the light source 9. The control signals comprise a first control signal and a second control signal.

The first control signal is a pulse voltage signal with a pulse width of 10-100 us and a pulse frequency of 10-1000 Hz, and used to control on/off of the light source 9. When receiving the pulse signal, the light source 9 will be turned on a certain delay later and will be turned off a period of time later. The light source 9 is turned on and off according to the frequency of the pulse signal, and the detector 11 performs sampling detection according to the frequency of the pulse signal, such that the light source 9 and the detector 11 are kept synchronous.

The second control signal is a level signal (a variable voltage signal with a voltage of 0-5 V) and is used to control the light intensity of the light source 9. When the light source 9 receives the level signal, the voltage will be amplified in proportion to turn on the light source 9, and the light intensity of the light source 9 will be increased with the rise in the voltage, so the magnitude of the level signal is in positive correlation with the brightness of the light source 9.

For example, in a case where film thickness information is monitored, in the polishing process, the polishing disc 1 and the polishing pad 2 fixed to the polishing disc 1 rotate at a set speed, and the light window 4 on the polishing pad 2 rotates synchronously to form a light window path 7; when the light window 4 passes through the space below the wafer 8 carried by the polishing head 5, spectral information reflected by the wafer 8 is acquired by the detector 11 by means of the reflecting unit 12 and the detection probe 13, and with reference to the relation between the spectral information and the film thickness of the surface of the wafer 8, online measurement of the thickness information of a film on the surface of the wafer 8 can be realized; with the change of the rotation speed of the polishing disc 1, the time for the light window 4 to pass through the space below the wafer 8 carried by the polishing head 5 will be different, and the signal sampling frequency is controlled by means of the first control signal to guarantee sufficient sampling points, such that sufficient signal data can be acquired; with the proceeding of polishing, the light window 4 will be abraded to different degrees, and the difference in the concentration of polishing liquid adopted for different processes and the state of the signal light path, the intensity of the signal light will change, and by controlling the voltage of the second control signal, the intensity of the signal light will be maintained within a suitable range of the detector 11, thus improving the film thickness measurement accuracy and precision.

In the polishing process, the reference beam will be continuously monitored by the light intensity detector to obtain a reference intensity of the reference light; the reference light reflects the state of the light source 9, aging of the light source 9 and fluctuations of the light intensity of the light source 9 caused by voltage instabilities or other factors can be handled according to the spectral information and light intensity of the reference light, and by controlling the voltage of the second control signal, the light intensity of the light source 9 can be maintained stable, thus improving the film thickness measurement accuracy and precision.

The above specific embodiments are used for explaining the invention rather than limiting the invention. Any modifications and transformations made to the invention based on the spirit of the invention and the protection scope of the claims should also fall within the protection scope of the invention.

## Claims

1. An online monitoring device for CMP, **characterized in that**, being arranged in a polishing disc, rotating with the polishing disc, and comprising:
a light source;
an optical lens set, configured to receive a light beam emitted by the light source and generate a collimated beam;
a reflecting unit, configured to receive the collimated beam and reflect the collimated beam to form an incident beam;
a detection probe, arranged below a light window of a polishing pad and at least comprising a quartz light tube and a single-core optical fiber, the quartz light tube being configured to receive the incident beam and emit the incident beam from an end, close to a wafer, of the detection probe, and the single-core optical fiber being configured to receive an emergent beam reflected by a surface of the wafer; and
a detector, connected to the single-core optical fiber and configured to receive the emergent beam to acquire corresponding spectral information to determine a polishing end-point of the wafer.

2. The online monitoring device for CMP according to claim 1, **characterized in that**, the detection probe further comprises a shell; the quartz light tube wraps the single-core optical fiber, the shell wraps the quartz light tube, and the shell, the quartz light tube and the single-core optical fiber are arranged concentrically; or, the quartz light tube and the single-core optical fiber are arranged adjacently, and the shell wraps the quartz light tube and the single-core optical fiber.

3. The online monitoring device for CMP according to claims 1 or 2, **characterized in that**, the quartz light tube is flush with an end surface of an end, close to the wafer, of the single-core optical fiber, and an end surface, close to the wafer, of the quartz light tube has a chamfer.

4. The online monitoring device for CMP according to claim 3, **characterized in that**, the chamfer is a straight chamfer with a tilt angle of 0-45°; or, the chamfer is a circular chamfer with a curvature of 0-2 mm⁻¹.

5. The online monitoring device for CMP according to claim 1, **characterized in that**, at an end where the quartz light tube and the single-core optical fiber are away from the wafer, the single-core optical fiber protrudes out of the quartz light tube.

6. The online monitoring device for CMP according to claim 1, **characterized in that**, an outer diameter of the quartz light tube is 1-4 mm, and an outer diameter of the single-core optical fiber is 0.1-2 mm.

7. The online monitoring device for CMP according to claim 1, **characterized in that**, the light source is a broadband light source and has a wavelength of 200-2000 nm, and the collimated beam has a diameter of 1-10 mm.

8. The online monitoring device for CMP according to claim 1, **characterized in that**, the detector is a spectrometer; the detector acquires the corresponding spectral information and converts the corresponding spectral information into thickness information of a dielectric film on the surface of the wafer to determine the polishing end-point of the wafer.

9. The online monitoring device for CMP according to claim 1, **characterized in that**, further comprising a reference light sampling unit arranged between the optical lens set and the detection probe and configured to monitor a light intensity of the light source.

10. The online monitoring device for CMP according to claim 9, **characterized in that**, the reference light sampling unit comprises a first beam splitter and a second beam splitter, the collimated beam passes through the first beam splitter to form a signal light and a reference light, and the signal light penetrates through the first beam splitter to enter the detection probe.
